# EUROPEAN PATENT APPLICATION

(11) **EP 2 913 723 A1**
(43) Date of publication of application: **02.09.2015**
(21) Application number: 14166863.2
(22) Date of filing: 02.05.2014
(51) Int. Cl.: G04C 17/00, G06F 3/0488, G04G 9/00, G04G 21/04, G04G 21/08, G04B 47/00

(54) **Mechanical/quartz movement smart watch hybrid**

(30) Priority: 27.02.2014 US 201461945690 P; 29.04.2014 US 201414264241
(71) Applicant: Kairos Watches, Kowloon, Hong Kong (HK)
(72) Inventor: Yang, Sun Jong, Tsim Sha Tsui KOWLOON (HK)
(74) Representative: Franks & Co Limited

(57) **Abstract**

A hybrid watch is provided. The hybrid watch may include a band coupled to a housing so as to be worn fashionably. The housing may form a front face opening and a backing. The housing may retain a plurality of legacy components between a transparent display unit and an operably connected microprocessor so that the plurality of legacy components may be presented through the front face opening. The protective layer may sandwich at least one touch sensor between the transparent display unit. The at least one touch sensor may be operably connected to the microprocessor and the protective layer. A user may don the hybrid watch as a fashion item. Then the user may touch the protective layer to provide access to a variety of applications and other smart technology features visually expressed on the transparent display unit.

## Description

### BACKGROUND OF THE INVENTION

The present invention relates to wrist watches and, more particularly, to fusing a traditional mechanical wrist watch with smart-watch components.

Traditionally, a significant variety of wrist watches are considered more of a fashion item than a functional device. Traditional watch makers maintained their brand's heritage and iconic appeal by integrating mechanical functional design and mechanical form. However, traditional mechanical watches lack the wide variety of "smart" technologies offered by all-electric smart watches as the former are built to perform limited amount of functions such as showing time, date, and chronographs using mechanical components. Alternatively, all-electronic smart watches are made with plastic and metal components that lack the aesthetic appeal to carry on the legacy of iconic wrist watch looks and designs.

As can be seen, there is a need for combining transparent display technology and smart functions with traditional mechanical components and iconic designs.

### SUMMARY OF THE INVENTION

In one aspect of the present invention, hybrid watch presenting a plurality of legacy components coupled to smart technologies, the hybrid watch comprises: a housing forming a front face opening and a backing; a transparent display unit coupled to the housing along the perimeter of the front face opening so as to present the plurality of legacy components therethrough; a protective layer mounted over the transparent display unit to protect the transparent display unit, wherein the protective layer is made of transparent material; a microprocessor coupled to the housing, wherein the microprocessor is disposed between the plurality of legacy components and the backing; and a band connected to the housing, whereby the hybrid watch is capable of being worn.

In another aspect of the present invention, method of combining the legacy components of a traditional wrist watch with smart technologies to form a hybrid watch, comprises: providing a housing forming a front face opening and a backing; a transparent display unit coupled to the housing along the perimeter of the front face opening so as to present the plurality of legacy components therethrough; a protective layer mounted over the transparent display unit to protect the transparent display unit, wherein the protective layer is made of transparent material; a microprocessor coupled to the housing, wherein the microprocessor is disposed between the plurality of legacy components and the backing; and a band connected to the housing, whereby the hybrid watch is capable of being worn; and fashionably donning the hybrid watch.

These and other features, aspects and advantages of the present invention will become better understood with reference to the following drawings, description and claims.

### BRIEF DESCRIPTION OF THE DRAWINGS

Figure 1 is a front view of an exemplary embodiment of the present invention;
Figure 2 is a perspective view of an exemplary embodiment of the present invention;
Figure 3 is an exploded view of an exemplary embodiment of the present invention;
Figure 4 is a section detail view of an exemplary embodiment of the present invention; and
Figure 5 is a side view of an exemplary embodiment of the present invention.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the present invention.

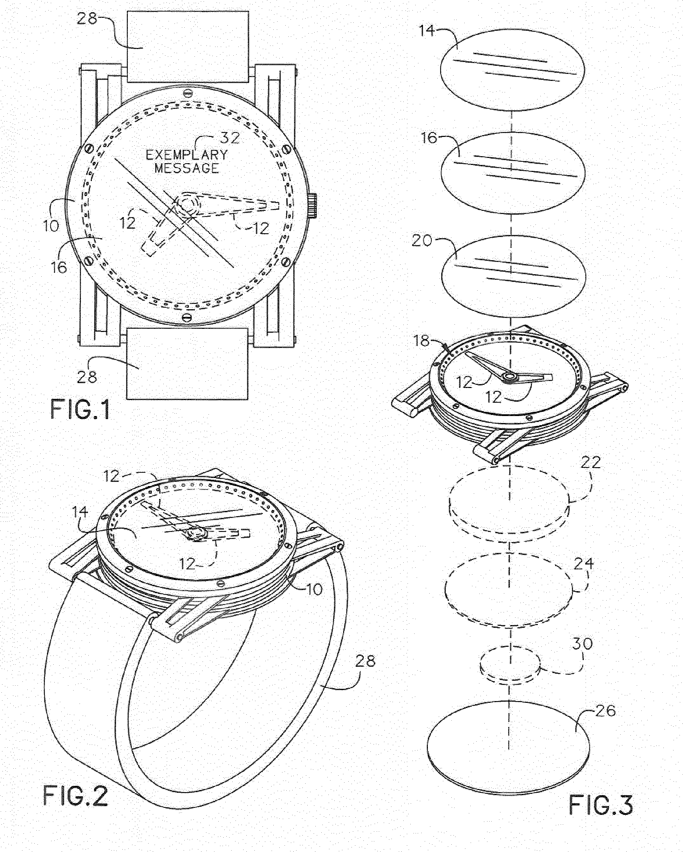

Broadly, an embodiment of the present invention provides a hybrid watch. The hybrid watch may include a band coupled to a housing so as to be worn fashionably. The housing may form a front face opening and a backing. The housing may retain a plurality of legacy components between a transparent display unit and an operably connected microprocessor so that the plurality of legacy components may be presented through the front face opening. The protective layer may sandwich at least one touch sensor between the transparent display unit. The at least one touch sensor may be operably connected to the microprocessor and the protective layer. A user may don the hybrid watch as a fashion item. Then the user may touch the protective layer to provide access to a variety of applications and other smart technology features visually expressed on the transparent display unit. Referring now to Figures 1 through 5, the present invention may include a hybrid watch 100. The hybrid watch 100 may include a band 28 coupled to a housing 10. The hybrid watch 100 may include a protective layer 14, a microprocessor 24, a transparent display unit 20, at least one touch sensor 16, a power source 30, and a plurality of legacy components 22 retained within the housing 10.

The plurality of legacy components 22 may include, but not be limited to, a case, dial, markers, bezel, sub-dials, lug ends, crown, a plurality of hands 12 and other traditional mechanical movement components. The plurality of legacy components 22 may include a plurality of legacy icons 18 The plurality of legacy icons 18 may include any picture, symbol, images, markings, colors and/or messages congruent with the traditional watch making heritage and design. In certain embodiments, the plurality of legacy icons 18 may be placed on the master plate (face) of the hybrid watch 100 to display icon-based designs, as illustrated in Figure 1.

The band 28 may include a strap connected to the housing, whereby the hybrid watch 100 may be capable of being worn on the human body, such as the wrist or arm. The band 28 may a wristband legacy icon 18.

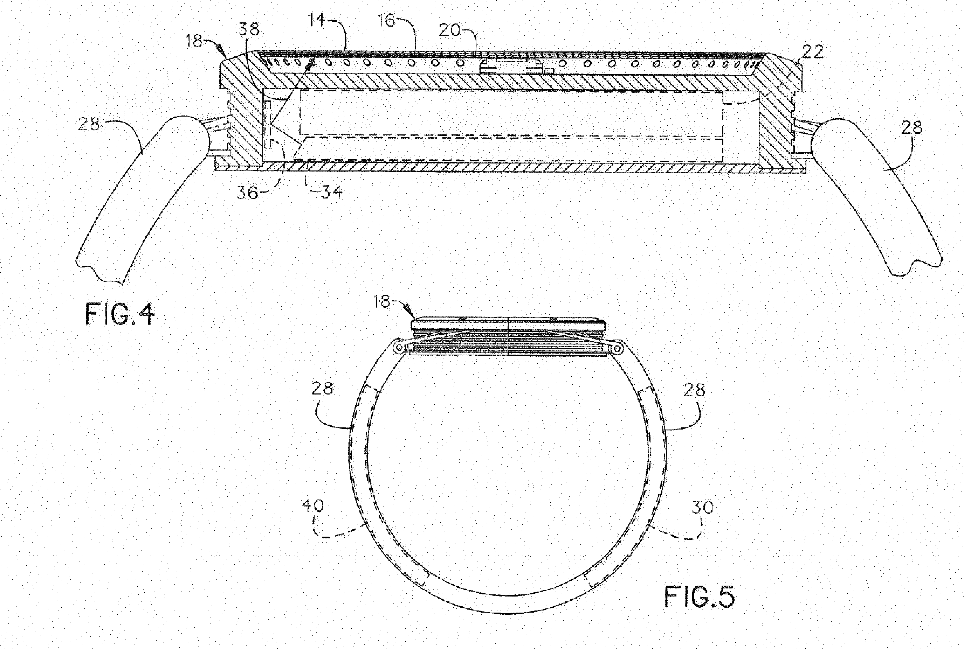

The power source 30 may be mounted and/or coupled to the housing 10. The power source 30 may include a battery or the like that may be electrically connected to the microprocessor 24. In certain embodiments, the power source 30 may be integrally mounted to the housing 10 during fabrication. The power source 30 may be configured to be flexible enough to be housed in the band 28, as illustrated in Figure 5.

The housing 10 may form a front face opening 32 and a backing 26. The front face opening 32 may be sized so as to present the plurality of legacy components 22 and/or the plurality of legacy icons 18. The housing 10 and the backing 26 may be adapted to retain and support the microprocessor 24 and power source 30 so that the plurality of legacy components 22 may be presented through the front face opening 32. The housing 10 may be adapted to function as an antenna transmitting and/or receiving a plurality of signals that are processed by the microprocessor 24. The housing 10 may include the case legacy component 22.

The protective layer 14 may be coupled to the housing 10 by fixing a attachment so as to retain the microprocessor 24, the plurality of legacy components 22 and the power source 30 between the protective layer 14 and the housing 10 so that a portion of the plurality of legacy components 22 are presented through the protective layer 14. In certain embodiments, the protective layer 14 may be integrally mounted to the housing 10 during fabrication. The protective layer 14 may include any type of transparent or semitransparent material, including glass, sapphire, crystal, plexiglass, or the like, having transparent region as large as the area of the transparent display unit 20. The protective layer 14 may include a structure for enhancing the visibility of the plurality of legacy icons 18.

The transparent display unit 20 may be adapted to visually express information. The transparent display unit 20 may include a liquid crystal display (LCD), organic light emitting diodes (OLED), transparent OLED (TOLED), e-paper, or the like.

In certain embodiments, the hybrid watch 100 may include a projector 34 operably connected to microprocessor 24 so as to be adapted to project visually expressed information onto the transparent display unit 20. The projector 34 may be adapted to transmit signals 38 reflectively to the protective layer 14 by utilizing a reflective element 36, such as a mirror or the like so as to bypass the plurality of legacy components 22.

The transparent display unit 20 may include at least one touch sensor 16 communicatively coupled to a tactile interface unit. The tactile interface unit may be in communication with the microprocessor 24 and the protective layer 14. In certain embodiments, the communicative connection may include a cable 34. The tactile interface unit may take a variety of forms including, but not limited to, a touchpad, a touch screen and/or a user interface. The tactile interface unit may be adapted for inputting information by a touch method through the protective cover 14.

The at least one touch sensor 16 may be adapted for inputting information by a touch method. Accordingly, when there is a touch to any one place on the protective layer 14 the content corresponding to the touched position is entered. The content entered through the at least one touch sensor 16 may be a characters or numeral, or any menu item capable of instructing or specifying a function in various modes, or the like. The at least one touch sensor 16 may be a transparent material for allowing the user to view a display unit therein.

The microprocessor 24 may be coupled to the housing 10 so as to maintain its location within the housing 10. In certain embodiments, the 10 microprocessor 24 may be integrally mounted to the housing 10 during fabrication. The microprocessor 24 may include a control circuitry and wireless transceiver. The control circuitry may include a wireless communication module for processing signals transmitted and/or received via the wireless transceiver, which may provide a connection to a wireless network. Examples of the wireless network include, but 15 are not limited to, the Internet, a wide area network, a local area network, a satellite network, a telecommunications network, a private network, and combinations of these. The wireless transceiver may communicate with various software applications including photo, video, music and the like. The microprocessor 24 may control input and output elements on the control circuitry 20 and/or transmitted via the wireless transceiver. In certain embodiments, the microprocessor 24 may be paired to a mobile device. The mobile device may include a smart phone, a tablet, any electronic device providing a wide variety of "smart" technologies and the like. The microprocessor 24 may be configured to be flexible enough to be housed in the band 28, as illustrated in Figure 5, as a flexible microprocessor 40.

A method of using the present invention may include the following. The hybrid watch 100 disclosed above may be provided. A user may don the hybrid watch 100 as a fashion item including the plurality of legacy components 22 and the plurality of legacy icons 18. Then the user may touch the protective layer 14 to activate the tactile user interface, which will provide access to a variety of applications and other smart technology features.

In certain embodiments, the hybrid watch 100 functions are only active when there is a new notification, or when the user activates it intentionally. This provides a discreet notification and control option while providing the same look and feel of a traditional mechanical watch. The user may also control various smart applications including photo and music, from the invention without having to use the paired mobile device. In certain embodiments, software may control the microprocessor 24. The software may include custom mobile applications.

In certain embodiments, new sensors may be added to the hybrid watch 100 so as to transform the invention into a wearable health monitor or fitness tracker.

It should be understood, of course, that the foregoing relates to exemplary embodiments of the invention and that modifications may be made 15 without departing from the spirit and scope of the present invention.

## Claims

1. A hybrid watch presenting a plurality of legacy components coupled to smart technologies, the hybrid watch comprising:
a housing forming a front face opening and a backing;
a transparent display unit coupled to the housing along the perimeter of the front face opening so as to present the plurality of legacy components therethrough;
a protective layer mounted over the transparent display unit to protect 10 the transparent display unit, wherein the protective layer is made of transparent material;
a microprocessor coupled to the housing, wherein the microprocessor is disposed between the plurality of legacy components and the backing; and
a band connected to the housing, whereby the hybrid watch is capable of being worn.

2. The hybrid watch of claim 1, wherein the microprocessor includes a control circuitry and wireless transceiver.

3. The hybrid watch of claim 1, further comprising a plurality of legacy icons disposed to be presented through the front face opening.

4. Thy hybrid watch of claim 1, further comprising a power source coupled to the housing so as to be disposed between the backing and the plurality of legacy components.

5. The hybrid watch of claim 1, further comprising at least one touch sensor having a tactile interface unit, wherein the at least one touch sensor is disposed between the protective layer and the transparent display unit, and wherein the at least one touch sensor is communicatively coupled to a microprocessor and the protective layer.

6. The hybrid watch of claim 1, further comprising a projector disposed between the backing and the plurality of legacy components, wherein the projector is operably connected to microprocessor so as to be configured to project visually expressed information onto the transparent display unit.

7. The hybrid watch of claim 6, further comprising a reflective element configured to bypass the plurality of legacy components when transmitting a signal the projector to be visually expressed on the transparent display unit.

8. A method of combining the legacy components of a traditional wrist watch with smart technologies to form a hybrid watch, comprising:
providing a housing forming a front face opening and a backing;
a transparent display unit coupled to the housing along the perimeter of the front face opening so as to present the plurality of legacy components therethrough; a protective layer mounted over the transparent display unit to protect the transparent display unit, wherein the protective layer is made of transparent material; a microprocessor coupled to the housing, wherein the microprocessor is disposed between the plurality of legacy components and the backing; and a band connected to the housing, whereby the hybrid watch is capable of being worn; and
fashionably donning the hybrid watch.

9. The method of claim 10, further including providing a power source coupled to the housing so as to be disposed between the backing and the plurality of legacy components.

10. The method of claim 10, wherein the power source is configured to be housed within the band.

11. The method of claim 10, further including providing at least one touch sensor having a tactile interface unit, wherein the at least one touch sensor is disposed between the protective layer and the transparent display unit, and wherein the at least one touch sensor is communicatively coupled to a microprocessor and the protective layer.

12. The method of claim 10, further including providing a projector disposed between the backing and the plurality of legacy components, wherein the projector is operably connected to microprocessor so as to be configured to project visually expressed information onto the transparent display unit.

13. The method of claim 10, further including providing a reflective element configured to bypass the plurality of legacy components when transmitting a signal from the projector to be visually expressed on the transparent display unit.

14. The method of claim 10, wherein the microprocessor is configured to be housed within the band.

15. A hybrid watch presenting a plurality of legacy components coupled to smart technologies, the hybrid watch comprising:
a housing forming a front face opening and a backing;
a transparent display unit coupled to the housing along the perimeter of the front face opening so as to present the plurality of legacy components therethrough;
a plurality of legacy icons disposed to be presented through the front fact opening.
a protective layer mounted over the transparent display unit to protect the transparent display unit, wherein the protective layer is made of transparent material;
a microprocessor coupled to the housing, wherein the microprocessor is disposed between the plurality of legacy components and the backing, and wherein the microprocessor includes a control circuitry and wireless transceiver;
a power source coupled to the housing so as to be disposed between the backing and the plurality of legacy components;
at least one touch sensor having a tactile interface unit, wherein the at least one touch sensor is disposed between the protective layer and the transparent display unit, and wherein the at least one touch sensor is communicatively coupled to a microprocessor and the protective layer;
a projector disposed between the backing and the plurality of legacy components, wherein the projector is operably connected to microprocessor so as to be configured to project visually expressed information onto transparent display unit;
a reflective element configured to bypass the plurality of legacy components when transmitting a signal from the projector to be visually expressed on the transparent display unit; and
a band connected to the housing, whereby the hybrid watch is capable of being worn.

## Amended claims

### Amended claims in accordance with Rule 137(2) EPC.

1. A hybrid watch presenting a plurality of legacy components coupled to smart technologies, the hybrid watch comprising:
a housing forming a front face opening and a backing;
a transparent display unit coupled to the housing along the perimeter of the front face opening so as to present the plurality of legacy components therethrough, the transparent display unit having an underside facing towards the plurality of legacy components;
a protective layer mounted over the transparent display unit to protect 10 the transparent display unit, wherein the protective layer is made of transparent material;
a microprocessor coupled to the housing, wherein the microprocessor is disposed between the plurality of legacy components and the backing;
a projector disposed between the backing and the plurality of legacy components, wherein the projector is operably connected to the microprocessor to project visually expressed formation onto the underside of the transparent display unit; and
a band connected to the housing, whereby the hybrid watch is capable of being worn.

2. The hybrid watch of claim 1, wherein the microprocessor includes a control circuitry and wireless transceiver.

3. The hybrid watch of claim 1, further comprising a plurality of legacy icons disposed to be presented through the front face opening.

4. Thy hybrid watch of claim 1, further comprising a power source coupled to the housing so as to be disposed between the backing and the plurality of legacy components.

5. The hybrid watch of claim 4, wherein the power source is configured to be housed within the band.

6. The hybrid watch of claim 1, further comprising at least one touch sensor having a tactile interface unit, wherein the at least one touch sensor is disposed between the protective layer and the transparent display unit, and wherein the at least one touch sensor is communicatively coupled to a microprocessor and the protective layer.

7. The hybrid watch of claim 6, further comprising a reflective element configured to bypass the plurality of legacy components when transmitting a signal to the projector to be visually expressed on the transparent display unit.

8. A hybrid watch presenting a plurality of legacy components coupled to smart technologies, the hybrid watch comprising:
a housing forming a front face opening and a backing;
a transparent display unit coupled to the housing along the perimeter of the front face opening so as to present the plurality of legacy components therethrough, the transparent display unit having an underside facing towards the plurality of legacy components;
a protective layer mounted over the transparent display unit to protect the transparent display unit, wherein the protective layer is made of transparent material;
a microprocessor;
a projector disposed between the backing and the plurality of legacy components, wherein the projector is operably connected to the microprocessor to project visually expressed information onto the underside of the transparent display unit and
a band connected to the housing , where by the hybrid watch is capable of being worn,
wherein the microprocessor is configured to be housed within the band.

9. A method of combining a plurality of legacy components of a traditional wrist watch with smart technologies to form a hybrid watch, comprising:
providing a housing forming a front face opening and a backing;
a transparent display unit coupled to the housing along the perimeter of the front face opening so as to present the plurality of legacy components therethrough; the transparent display unit having an underside facing towards the plurality of legacy components; a protective layer mounted over the transparent display unit to protect the transparent display unit, wherein the protective layer is made of transparent material; a microprocessor coupled to the housing, wherein the microprocessor is disposed between the plurality of legacy components and the backing; and a band connected to the housing, whereby the hybrid watch is capable of being worn; providing a projector disposed between the backing and the plurality of legacy components, wherein the projector is operably connected to the microprocessor to project visually expressed information onto the underside of the transparent display unit and
fashionably donning the hybrid watch.

10. The method of claim 9, wherein the microprocessor includes a control circuitry and wireless transceiver.

11. The method of claim 9, further including providing a plurality of legacy icons disposed to be presented through the front face opening.

12. The method of claim 10, further including providing a power source coupled to the housing so as to be disposed between the backing and the plurality of legacy components.

13. The method of claim 10, providing a power source is configured to be housed within the band.

14. The method of claim 10, further including providing at least one touch sensor having a tactile interface unit, wherein the at least one touch sensor is disposed between the protective layer and the transparent display unit, and wherein the at least one touch sensor is communicatively coupled to a microprocessor and the protective layer.

15. The method of claim 10, further including providing a reflective element configured to bypass the plurality of legacy components when transmitting a signal from the projector to be visually expressed on the transparent display unit.

16. The method of claim 10, wherein the microprocessor is configured to be housed within the band.

17. A hybrid watch presenting a plurality of legacy components coupled to smart technologies, the hybrid watch comprising:
a housing forming a front face opening and a backing;
a transparent display unit coupled to the housing along the perimeter of the front face opening so as to present the plurality of legacy components therethrough, the transparent display unit having an underside facing the plurality of legacy components;
a plurality of legacy icons disposed to be presented through the front fact opening.
a protective layer mounted over the transparent display unit to protect the transparent display unit, wherein the protective layer is made of transparent material;
a microprocessor coupled to the housing, wherein the microprocessor is disposed between the plurality of legacy components and the backing, and wherein the microprocessor includes a control circuitry and wireless transceiver;
a power source coupled to the housing so as to be disposed between the backing and the plurality of legacy components;
at least one touch sensor having a tactile interface unit, wherein the at least one touch sensor is disposed between the protective layer and the transparent display unit, and wherein the at least one touch sensor is communicatively coupled to a microprocessor and the protective layer;
a projector disposed between the backing and the plurality of legacy components, wherein the projector is operably connected to microprocessor so as to be configured to project visually expressed information onto the underside of the transparent display unit;
a reflective element configured to bypass the plurality of legacy components when transmitting a signal from the projector to be visually expressed on the transparent display unit; and
a band connected to the housing, whereby the hybrid watch is capable of being worn.
